# EUROPEAN PATENT APPLICATION

(11) **EP 2 874 401 A1**
(43) Date of publication of application: **20.05.2015**
(21) Application number: 14164758.6
(22) Date of filing: 15.04.2014
(51) Int. Cl.: H04N 21/422

(54) **Apparatus, method, and system for controlling device based on user interface that reflects user's intention**

(30) Priority: 19.11.2013 KR 20130140402
(71) Applicant: Humax Co., Ltd., Gyeonggi-do 463-875 (KR)
(72) Inventor: Park, Sung Heum, 446-579 Yongin-si (KR)
(74) Representative: Zardi, Marco

(57) **Abstract**

Disclosed are a device control apparatus, method, and system based on a user interface that reflects a user's intention. The apparatus may includes a user interface processing unit for displaying a user interface, including a content selection unit for selecting content and first and second control icons, on the touch screen of a first device, generating a selection icon indicating that the content has been selected when a signal to select the content selection unit is received from the touch screen, and displaying the selection icon on the touch screen and a transmission unit for sending a message, requesting that the content be displayed on a screen of a second device either in full screen mode or PIP mode, to the second device when at least part of the selection icon enters the first control icon or the second control icon is detected by the touch screen.

## Description

Priority to Korean patent application number 2013-0140402 filed on November 19, 2013, the entire disclosure of which is incorporated by reference herein, is claimed.

### BACKGROUND OF THE INVENTION

### Field of the Invention

The present invention relates to an apparatus, method, and system for controlling a device based on a user interface that reflects a user's intention and, more particularly, to an apparatus, method, and system, which are capable of providing a user interface that enables a user to intuitively express his or her intention and controlling the display of content of an interoperating device based on the user interface.

### Discussion of the Related Art

Recently, Internet Protocol Television (IPTV) using a digital communication network is widely used. IPTV can provide various services that could not be provided in existing analog broadcasting service. For example, IPTV provides bi-directivity that enables a user to actively select the type of program, a viewing time, etc. IPTV may also provide various supplementary services, for example, an Internet search, home shopping, and online games based on such bi-directivity.

As data communication standards and the standardization of a terminal are carried out and devices become smart, there is an increasing need to construct a more efficient and convenient system that enables a plurality of devices and services to interoperate with each other. A representative example that complies with such a need is a home network. In general, a home network is based on Digital Living Network Alliance (DLNA), that is, an official cooperation for the commercialization of the home network. Companies which develop home appliances, wireless devices, and PC-related devices are introducing a guideline for product development based on the DLNA industry standard related to a home network.

Such a home network enables devices and services, distributed to several places, to interoperate with each other through wired or wireless communication. For example, in a home network interoperability environment, the playback of content can be controlled in another device based on the manipulation of a control device by a user. Korean Patent Laid-Open Publication No. 2006-0074369 discloses a video playback system for playing back content stored in a mobile communication terminal using TV.

One of key points in developing a device interoperability system based on a home network is to enable a user to easily manipulate a Digital Media Controller (DMC) in a control device, for example, in DLNA. In particular, as smart devices based on touch screens are recently widely used, various graphic user interfaces could have been applied to interoperability between devices. Accordingly, there is an urgent need for the development of a system that enables a user to intuitively manipulate the playback of content in accordance with a Digital Media Renderer (DMR) or a Digital Media Player (DMP) using a control device.

### [Prior Art Document]

### [Patent Document]

Korean Patent Laid-Open Publication No. 2006-0074369

### Summary of the Invention

An object of the present invention is to provide an apparatus, method, and system, which are capable of providing a user interface that enables a user to intuitively express his or her intention and controlling the display of content of an interoperating device based on the user interface.

In accordance with an aspect of the present invention, there is provided a device control apparatus based on a user interface that reflects a user's intention. The device control apparatus includes a user interface processing unit for displaying a user interface, including a content selection unit for selecting content and a first control icon and a second control icon, on the touch screen of a first device, generating a selection icon indicating that the content has been selected when a signal to select the content selection unit is received from the touch screen, and displaying the selection icon on the touch screen and a transmission unit for sending a control message, requesting that the content be displayed on a screen of a second device using any one of full screen mode and Picture In Picture (PIP), to the second device when at least part of the selection icon enters any one of the first control icon and the second control icon and a lapse of a predetermined period or more is detected by the touch screen.

The user interface displays the playback screen of the content, the content selection unit is at least part of the playback screen, and the content selection unit may indicate that the content has been selected in a form in which the selection icon is separated from the playback screen, when the content selection unit is touched in accordance with a predetermined pattern or for a predetermined period.

The user interface displays the playback screen of the content, the selection icon is displayed based on a preset size and transparency, and the selection icon may display a screen identical with the playback screen of the content and move on the touch screen in response to a movement of a touch point by a user's touch.

The first control icon may display a first picture indicative of a full screen, and the second control icon may display a first picture configured to indicate the full screen and a second picture of a predetermined size disposed in the first picture of the second control icon and configured to indicate a subscreen.

The user interface further may include a third control icon. The transmission unit may send a message, requesting that the content be displayed using a subscreen of a first size, to the second device when at least part of the selection icon enters the second control icon and a lapse of a predetermined period or more is detected by the touch screen. The transmission unit may send a message, requesting that the content be displayed using a subscreen of a second size, to the second device when at least part of the selection icon enters the third control icon and a lapse of a predetermined period or more is detected by the touch screen.

The second control icon may display a first picture configured to indicate a full screen and a second picture of a predetermined size disposed in the first picture of the second control icon and configured to indicate a subscreen of the first size. The third control icon may display a first picture configured to indicate the full screen and a third picture of a predetermined size disposed in the first picture of the third control icon and configured to indicate the subscreen of the second size. The second picture and the third picture may have different sizes.

The second control icon may include a first picture configured to indicate a full screen, a second picture of a predetermined size disposed in the first picture of the second control icon and configured to indicate a subscreen of a first size, and a third picture disposed in the first picture of the second control icon and configured to indicate a subscreen of a second size and have a size different from a size of the second picture.

The transmission unit may send a message, requesting that the content be displayed using the subscreen of the first size, to the second device when at least part of the selection icon enters the second picture and a lapse of a predetermined period or more is detected by the touch screen. The transmission unit may send a message, requesting that the content be displayed using the subscreen of the second size, to the second device when at least part of the selection icon enters the third picture and a lapse of a predetermined period or more is detected by the touch screen. The user interface processing unit may highlight the second picture or the third picture when entry of at least part of the selection icon into the second picture or the third picture is detected by the touch screen.

The user interface processing unit may hide at least any one of the second picture and the third picture. The user interface processing unit may display the at least one hidden picture when the entry of at least part of the selection icon into the at least one hidden picture is detected by the touch screen.

The control message may include at least one of a Universal Resource Identifier (URI) for accessing the content, display mode information indicating that the content is to be displayed on a screen of the second device in either the full screen mode or the PIP mode, screen size information indicating a screen size of the content displayed in the second device, and playback point information indicating a point of time at which the content starts to be played back in the second device.

In accordance with another aspect of the present invention, there is provided a device control method. The device control method may include displaying a user interface, including a content selection unit for selecting content and a first control icon and a second control icon, on the touch screen of a first device, generating a selection icon indicating that the content has been selected when a signal to detect a selection of the content selection unit is received from the touch screen, displaying the generated selection icon on the touch screen, and sending a message, requesting that the content be displayed on a screen of a second device using any one of full screen mode and PIP mode, to the second device when at least part of the selection icon enters any one of the first control icon and the second control icon and a lapse of a predetermined period or more is detected by the touch screen.

The user interface displays the playback screen of the content, the content selection unit is at least part of the playback screen, and the content selection unit may indicate that the content has been selected in a form in which the selection icon is separated from the playback screen, when the content selection unit is touched in accordance with a predetermined pattern or for a predetermined period.

The user interface displays the playback screen of the content, the selection icon is displayed based on a preset size and transparency, and the selection icon may display a screen identical with the playback screen of the content and move on the touch screen in response to a movement of a touch point by a user's touch.

The first control icon may display a first picture indicative of a full screen, and the second control icon may display a first picture configured to indicate the full screen and a second picture of a predetermined size disposed in the first picture of the second control icon and configured to indicate a subscreen.

The user interface further may include a third control icon. The device control method further may include sending a message, requesting that the content be displayed using a subscreen of a first size, to the second device when at least part of the selection icon enters the second control icon and a lapse of a predetermined period or more is detected by the touch screen and sending a message, requesting that the content be displayed using a subscreen of a second size, to the second device when at least part of the selection icon enters the third control icon and a lapse of a predetermined period or more is detected by the touch screen.

The second control icon may display a first picture configured to indicate a full screen and a second picture of a predetermined size disposed in the first picture of the second control icon and configured to indicate a subscreen of the first size. The third control icon may display a first picture configured to indicate the full screen and a third picture of a predetermined size disposed in the first picture of the third control icon and configured to indicate the subscreen of the second size. The second picture and the third picture may have different sizes.

The device control method may further include sending a message, requesting that the content be displayed using the subscreen of the first size, to the second device when at least part of the selection icon enters the second picture and a lapse of a predetermined period or more is detected by the touch screen and sending a message, requesting that the content be displayed using the subscreen of the second size, to the second device when at least part of the selection icon enters the third picture and a lapse of a predetermined period or more is detected by the touch screen.

The device control method may further include hiding at least any one of the second picture and the third picture and displaying the at least one hidden picture when entry of at least part of the selection icon into the at least one hidden picture is detected by the touch screen.

In accordance with yet another aspect of the present invention, there is provided a device control system. The device control system may include a first device and a second device. The first device may display a user interface, including a content selection unit for selecting content and a first control icon and a second control icon, on a touch screen of the first device, generate a selection icon indicating that the content has been selected when a signal to select the content selection unit is received from the touch screen, display the selection icon on the touch screen, and send a message, requesting that the content be displayed on a screen of a second device using any one of full screen mode and PIP mode, to the second device when at least part of the selection icon enters any one of the first control icon and the second control icon and a lapse of a predetermined period or more is detected by the touch screen.

In accordance with further yet another aspect of the present invention, there is provided a device control apparatus. The device control apparatus may include a user interface processing unit for displaying a user interface, including a content selection unit for selecting content and a plurality of control icons, on the touch screen of a first device and for generating a selection icon indicating that the content has been selected and displaying the generated selection icon on the touch screen when a content selection signal is received from the touch screen and a message transmission unit for sending a control message, including information about the content, information for selecting any one of full screen mode and PIP mode, and information about the size of a subscreen, to the second device when at least part of the selection icon enters any one of the plurality of control icons and a lapse of a predetermined period or more is detected by the touch screen.

In accordance with further yet another aspect of the present invention, there is provided a device control method. The device control method may include displaying a user interface, including a content selection unit for selecting content and a plurality of control icons, on the touch screen of a first device, generating a selection icon indicating that the content has been selected when a content selection signal is received from the touch screen, displaying the generated selection icon on the touch screen, and sending a control message, including information about the content, information for selecting any one of full screen mode and PIP mode, and information about the size of a subscreen, to the second device when at least part of the selection icon enters any one of the plurality of control icons and a lapse of a predetermined period or more is detected by the touch screen.

### Brief Description of the Drawings

FIG. 1 illustrates the construction of a system for realizing a method of controlling a device based on a user interface that reflects a user's intention in accordance with an exemplary embodiment of the present invention;
FIG. 2 a block diagram showing the construction of a first device shown in FIG. 1;
FIG. 3 is an exemplary diagram illustrating a user interface displayed by a user interface processing unit;
FIG. 4 is an exemplary diagram showing another embodiment of a user interface displayed by the user interface processing unit;
FIG. 5 is a flowchart illustrating a method of controlling a device in accordance with an exemplary embodiment of the present invention;
FIG. 6 is an exemplary diagram illustrating a user interface displayed by the first device;
FIG. 7 shows an example in which content is selected in a user interface of the first device;
FIG. 8 is an exemplary diagram illustrating the situations of the first device and a second device after a user selects a second control icon;
FIG. 9 shows the structure of a control message that is transmitted from the transmission unit of the first device to the second device;
FIG. 10 shows an example in which an application is displayed in PIP mode in the second device in response to a request from the first device;
FIG. 11 illustrates yet another embodiment of a user interface displayed by the first device;
FIG. 12 is an exemplary diagram showing the structure of a control message that is transmitted from the first device to the second device;
FIG. 13 illustrates further yet another embodiment of a user interface displayed by the first device;
FIG. 14 shows an example in which at least part of a selection icon enters the region of a third picture;
FIG. 15 shows an example in which at least part of a selection icon enters the region of a second picture; and
FIG. 16 is an exemplary diagram illustrating a user interface in which a control icon having a first control icon and a second control icon shown in FIG. 15 integrated therein is displayed.

### Detailed Description of the Embodiments

The present invention may be modified in various ways and may have several embodiments, and specific embodiments are to be illustrated in the drawings and described in detail. However, it is not intended to limit the present invention to a specific embodiment, and it should be understood that the present invention includes all changes, equivalents, and substitutions that are included in the spirit and technical scope of the present invention.

Terms, such as the first and the second, may be used to describe a variety of elements, but the elements should not be limited by the terms. The terms are used to only distinguish one element from the other element. For example, a first element may be named a second element, and likewise a second element may be named a first element without departing from the scope of the present invention. A term 'and/or' includes a combination of a plurality of related and described items or any one of a plurality of related and described items.

When it is said that one element is described as being 'connected' to or 'coupled' with the other element, the one element may be directly connected to or coupled with the other element, but it should be understood that a third element may be interposed between the two elements. In contrast, when it is said that one element is described as being 'directly connected' to or 'directly coupled' with the other element, it should be understood that a third element is not present between the two elements.

Terms used in this application are used to describe only specific embodiments and are not intended to limit the present invention. An expression of the singular number should be understood to include plural expressions, unless clearly expressed otherwise in the context. Terms, such as 'include' or 'have', should be understood to indicate the existence of a described characteristic, number, step, operation, element, part, or a combination of them and understood to not exclude the existence of one or more other characteristics, numbers, steps, operations, elements, parts, or a combination of them or a possibility addition of them.

All terms used herein, including technical or scientific terms, have the same meanings as those typically understood by those skilled in the art unless otherwise defined. Terms, such as ones defined in common dictionaries, should be construed as having the same meanings as those in the context of related technology and should not be construed as having ideal or excessively formal meanings unless clearly defined in this application.

Hereinafter, some exemplary embodiments of the present invention are described in more detail with reference to the accompanying drawings. In describing the present invention, in order to help general understanding, the same reference numerals are used to denote the same elements throughout the drawings and a redundant description of the same elements is omitted.

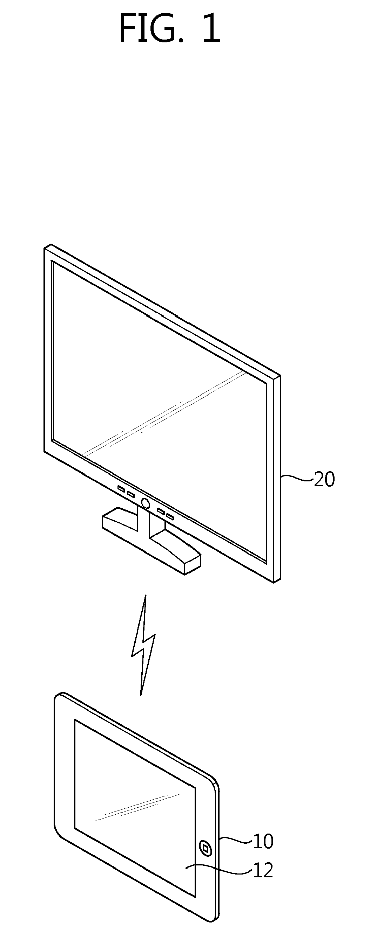

FIG. 1 illustrates the construction of a system for realizing a method of controlling a device based on a user interface that reflects a user's intention in accordance with an exemplary embodiment of the present invention.

As shown in FIG. 1, a device control system based on a user interface that reflects a user's intention in accordance with an exemplary embodiment of the present invention may include a first device 10 and a second device 20.

The first device 10 may mean a control device that provides a user interface capable of reflecting a user's intention and controls the second device 20 based on the user interface. For example, the second device 20 may include the function of a Digital Media Controller (DMC) in Digital Living Network Alliance (DLNA). The second device 20 may be a device that can be handheld by a user. For example, the second device 20 may be a portable device based on mobile, such as a smart phone, a smart pad, a tablet Personal Computer (PC), or a notebook.

The second device 20 may be a device that is controlled by the first device 10. The second device 20 may be a content playback device for playing back content, such as multimedia, moving images, and applications, and displaying content on a screen. For example, the second device 20 can perform the function of a Digital Media Player (DMP) or a Digital Media Renderer (DMR) in DLNA. For example, the second device 20 may be a set-top box that interoperates with smart TV and a TV set.

The first device 10 and the second device 20 can interoperate with each other based on communication that complies with a predetermined protocol. Furthermore, the first device 10 and the second device 20 can access a home network based on DLNA and interoperate with each other and can also interoperate with other devices connected to the home network.

The first device 10 accesses a wide area network, such as a wireless Internet, and can be provided with various Internet services based on the wide area network. Furthermore, the first device 10 can interoperate with the second device 20 through short-range wireless communication, such as Bluetooth, ZigBee, infrared communication, Radio Frequency (RF) communication, and Near Field Communication (NFC).

The second device 20 can access an IPTV network and can be provided with IPTV service. Furthermore, the second device 20 can interoperate with the first device 10 through short-range wireless communication, such as Bluetooth, ZigBee, infrared communication, RF communication, and NFC.

The first device 10 can select and play back content and display a user interface that enables a user to intuitively control the second device 20 to his or her intentions through a touch screen 12. Here, content is digital information including visual data and may be, for example, multimedia, a moving image, a still image, or an application program.

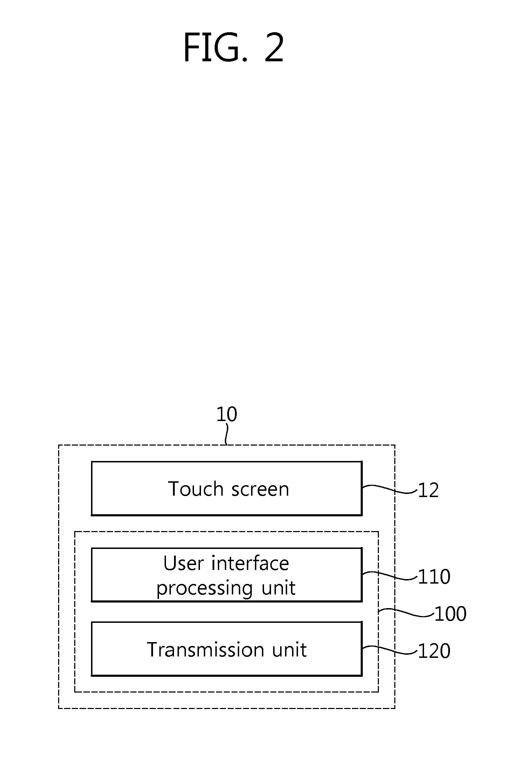

FIG. 2 a block diagram showing the construction of the first device 10 shown in FIG. 1.

As shown in FIG. 2, the first device 10 may include the touch screen 12 and a device control unit 100. The touch screen 12 and the device control unit 100 interoperate with each other by exchanging signals.

The touch screen 12 includes an information display function and an information input function based on a user's touch. The touch screen 12 may include a panel including a display device for the information display function. The display device may be a Liquid Crystal Display (LCD) panel, a Light emitting Polymer Display (LPD), Organic Light-Emitting Diodes (OLED), or Active matrix Organic Light-Emitting Diodes (AMOLED). Such a touch screen 12 can display a user interface which can provide information to a user under the control of a user interface processing unit 110 and can receive a touch input.

The device control unit 100 can display a user interface using the touch screen 12 and control the second device 20 based on the user interface. Such a device control unit 100 may include the user interface processing unit 110 and a transmission unit 120.

The user interface processing unit 110 can display various user interfaces necessary to control the second device 20 by reflecting a user's intention through controlling the touch screen 12. For example, the user interface processing unit 110 can display a user interface, including a content selection unit for selecting content and a plurality of control icons, on the touch screen 12 of the first device 10. When a signal to select the content selection unit is detected by the touch screen 12, the user interface processing unit 110 can generate a selection icon indicating that content has been selected and display the selection icon on the touch screen 12. A user can move the selection icon to a desired control icon on the touch screen 12.

When a user's touch is detected by the touch screen 12 based on a user interface, the transmission unit 120 can generate a message for controlling the second device 20 in response to a detected signal and send the message to the second device 20. For example, when at least part of the generated selection icon enters any one of a plurality of control icons and a lapse of a predetermined period or more is detected by the touch screen 12, the transmission unit 120 may send a control message, requesting that the content be displayed on a screen of the second device 20 in accordance with a display method corresponding to the selected control icon, to the second device 20.

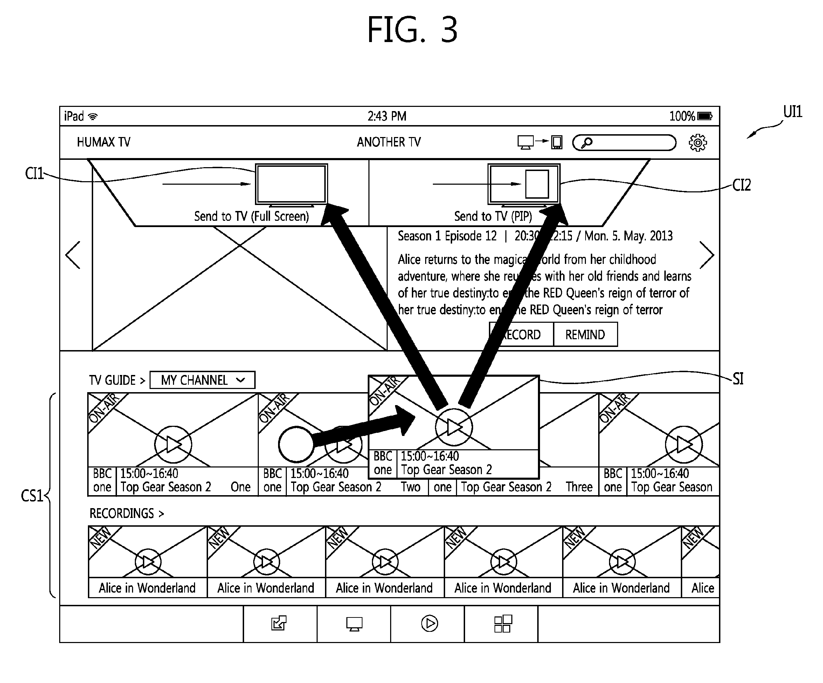

FIG. 3 is an exemplary diagram illustrating a user interface displayed by the user interface processing unit 110.

As shown in FIG. 3, a user interface UI1 displayed on the touch screen 12 of the first device 10 by the user interface processing unit 110 may include a content selection unit CS1 for selecting content. The content selection unit CS1 is a graphic item that is provided in the user interface UI1 so that a user can select content to be viewed through the second device 20. When the content selection unit CS1 is selected by a user, for example, when a user touches the content selection unit CS1 in the touch screen 12 for a predetermined time, content is selected.

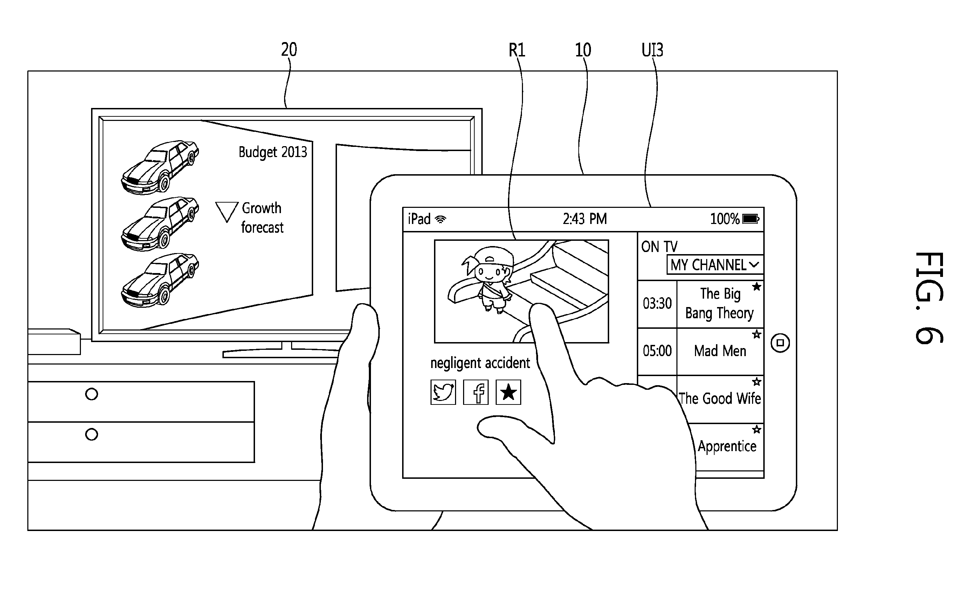

Such a content selection unit CS1 can be implemented on the playback screen of a content list or content. For example, the embodiment of FIG. 3 illustrates that the content selection unit CS1 is configured in the form of a TV broadcasting content list and a recording content list. Meanwhile, an embodiment in which the content selection unit is configured on the playback screen of content will be described later in connection with other embodiments described with reference to, for example, FIGS. 6 to 8.

The TV broadcasting content list shown in FIG. 3 may be a list of TV broadcasting programs. Each of pieces of content (i.e., TV broadcasting programs) in the TV broadcasting content list can be provided by the broadcasting server of an external server terminal. In the TV broadcasting content list, pieces of information about broadcasting programs may be disposed according to time as in, for example, Electronic Program Guide (EPG).

The recording content list may be a list of content items stored in at least one device. For example, the recording content list may be a list of content items that is stored in at least one of the first device 10, the second device 20, and another device within a home network. That is, the recording content list may include a list of content items stored in at least one Digital Media Server (DMS) within a home network. The DMS may be the first device 10, the second device 20, or a third device within a home network.

When a user views the TV broadcasting content list or the recording content list within the user interface UI1 and touches desired content for a predetermined time, the touched content can be selected. When the content is selected, the user interface processing unit 110 can generate a selection icon SI indicating that the content has been selected and display the selection icon SI.

When the content is selected, the selection icon SI is displayed in a form in which the selection icon SI is separated from pieces of content of the content list as if it springs out from the content list. The selection icon SI may be displayed in accordance with in accordance with a preset size and transparency. The user can move the selection icon SI on a screen of the user interface UI1 while maintaining a touch on the selection icon SI. For example, the selection icon SI can move on a screen of the user interface UI1 in response to a movement of a touch point by the user's touch.

For example, when a user selects the second one of 'Top Gear Season 2' in the TV broadcasting content list of FIG. 3, the selection icon SI can be displayed as if corresponding content springs out from the TV broadcasting content list. The user can move the selection icon SI to any one of a plurality of control icons CI1 and CI2 in the state in which the user has selected the selection icon SI.

Each of the plurality of control icons CI1 and CI2 is an icon that can control selected content so that the selected content is displayed in the second device 20 in specific display mode. In the embodiment shown in FIG. 3, the user interface UI1 displayed by the user interface processing unit 110 has been illustrated as including a first control icon CI1 and a second control icon CI2.

For example, the first control icon CI1 may be an icon that can control selected content so that the selected content is played back by the second device 20, but is displayed in full screen mode. The full screen mode may mean a mode in which content is displayed using the entire screen of the second device 20. Furthermore, the second control icon CI2 may be an icon that controls selected content so that the second device 20 displays the selected content in Picture In Picture (PIP) mode. The PIP mode may mean a mode in which content is displayed in part of the screen of the second device 20 as a subscreen.

From a graphic viewpoint, the user interface processing unit 110 can display the first control icon CI1 and the second control icon CI2 such that a user can be intuitively aware that the first control icon CI1 and the second control icon CI2 are full screen mode and PIP mode. For example, the first control icon CI1 may display a first picture indicative of a full screen. The second control icon CI2 may display a first picture configured to indicate the full screen and a second picture of a predetermined size disposed in the first picture of the second control icon and configured to indicate a subscreen.

When a user drags the selection icon SI to the first control icon CI1 and then places the selection icon SI on the first control icon CI1 for a predetermined period (e.g., several milliseconds to several seconds), the transmission unit 120 can generate a control message requesting that selected content be displayed in full screen mode and send the control message to the second device 20. In response to the control message, the second device 20 can display the selected content on the screen of the second device 20 in full screen mode.

When a user drags the selection icon SI to the second control icon CI2 and then places the selection icon SI on the second control icon CI2 for a predetermined period, the transmission unit 120 can generate a control message requesting that selected content be displayed in PIP mode and send the control message to the second device 20. In response to the control message, the second device 20 can display the selected content on a screen of the second device 20 in PIP mode.

In the example of FIG. 3, the content has been illustrated as being a multimedia video, such as a TV broadcasting program or recording content, has been described. However, the content may include various types of information including visual information, such as images or applications, in addition to multimedia.

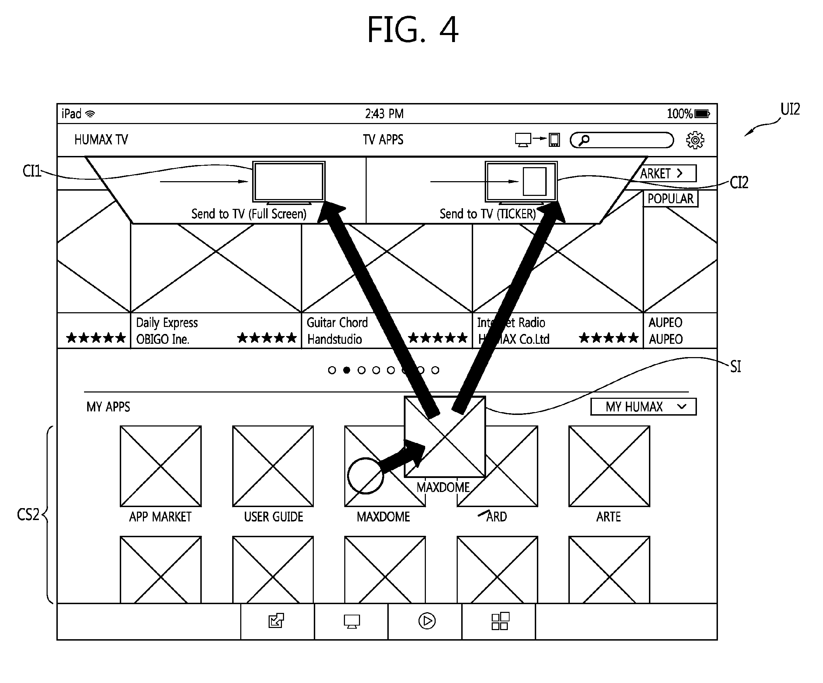

FIG. 4 is an exemplary diagram showing another embodiment of a user interface displayed by the user interface processing unit 110.

As shown in FIG. 4, a user interface UI2 can display an application list, that is, a content selection unit CS2 for selecting content. That is, content described with reference to the embodiment of FIG. 4 may be an application. A user can select content by selecting a desired application in the application list, for example, by touching a desired application in the touch screen 12. When the content is selected, the user interface processing unit 110 can generate a selection icon SI indicating that the content has been selected and display the selection icon SI.

As described above, when the content is selected, the selection icon SI is displayed in a form in which the selection icon SI is separated from pieces of content of a content list as if it springs out from the content list. The selection icon SI can be displayed in accordance with in accordance with a preset size and transparency. The user can move the selection icon SI on a screen of the user interface UI2 in the state in which the user has touched the selection icon SI. For example, the selection icon SI can move on a screen of the user interface UI2 in response to a movement of a touch point by the user's touch.

For example, when a user touches an application 'MAXDOME' in the application list of FIG. 4 for a predetermined time or more, the selection icon SI is displayed as if the application springs out from the application list. The user can move the selection icon SI to a first control icon CI1 or a second control icon CI2 while maintaining a touch on the selection icon SI in the state in which the user has touched the selection icon SI.

When the user drags the selection icon SI to the first control icon CI1 and then places the selection icon SI on the first control icon CI1 for a predetermined period (e.g., several milliseconds to several seconds), the transmission unit 120 may send a control message, requesting that the selected application be displayed in full screen mode, to the second device 20. In response to the control message, the second device 20 can display the selected application on the screen of the second device 20 in full screen mode.

When the user drags the selection icon SI to the second control icon CI2 and then places the selection icon SI on the second control icon CI2 for a predetermined period, the transmission unit 120 may send a control message, requesting that the selected application be displayed in PIP mode, to the second device 20. In response to the control message, the second device 20 can display the selected application on a screen of the second device 20 in PIP mode.

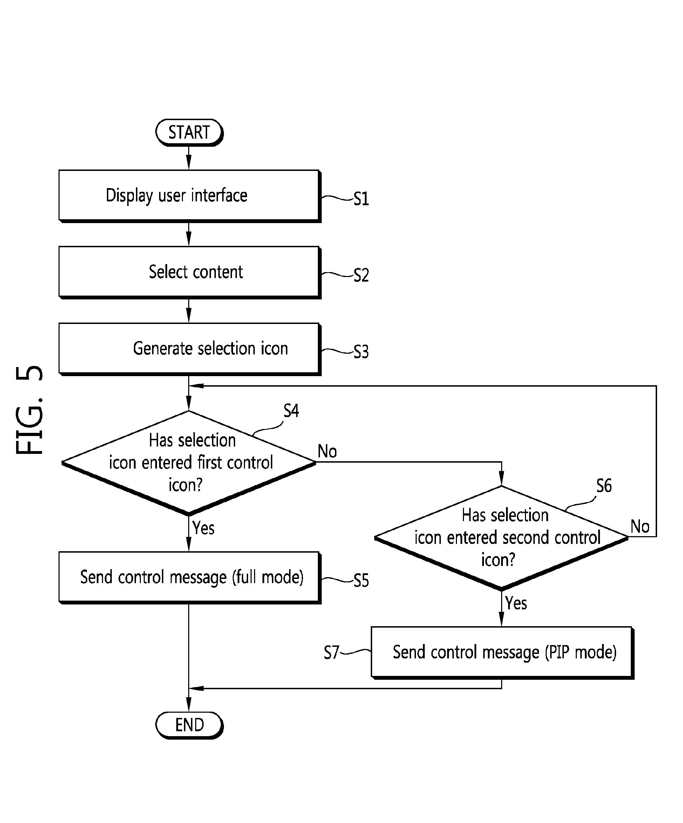

FIG. 5 is a flowchart illustrating a method of controlling a device in accordance with an exemplary embodiment of the present invention. A system for realizing the method of FIG. 5 may be based on the elements shown in FIGS. 1 and 2.

As shown in FIG. 5, the first device 10 can display a user interface at step S1. The user interface may include, for example, a content selection unit and a plurality of control icons. FIG. 6 is an exemplary diagram illustrating a user interface displayed by the first device 10.

As shown in FIG. 6, a content list is displayed on one side of the user interface UI3 displayed by the first device 10. A user can select desired content in the content list. When the user selects the desired content, the first device 10 can display the selected content on the playback screen of the selected content using a playback content display unit R1 that is provided on the other side of the user interface UI3, for example, on the left top side of the user interface UI3. In the example of FIG. 6, it is assumed that content displayed in the first device 10 in response to a user' selection is called first content and at the same time, second content is displayed in the second device 20.

A content selection unit for selecting content to be played back in the second device 20 is formed in at least part of the playback screen of content that is played back in the playback content display unit R1. That is, in the example of FIG. 3 or 4, the content selection unit has been illustrated as being implemented in the content list, whereas in the embodiment described with reference to FIG. 6, a content selection unit is configured on the playback screen of content.

In order to view content using the second device 20 while viewing the content using the first device 10, the user may touch the content selection unit, that is, the playback screen of the content, and maintains the touch for a predetermined period or more. In response thereto, the touch screen 12 generates a signal indicating that the user touches the content selection unit for the predetermined period or more. In response to the generated signal, the first device 10 may select the content being played back in the first device 10, for example, first content as content to be played back using the second device 20 at step S2 and generate the selection icon SI at step S3. When the selection icon SI is generated and displayed, a plurality of control icons can be displayed in the user interface UI3.

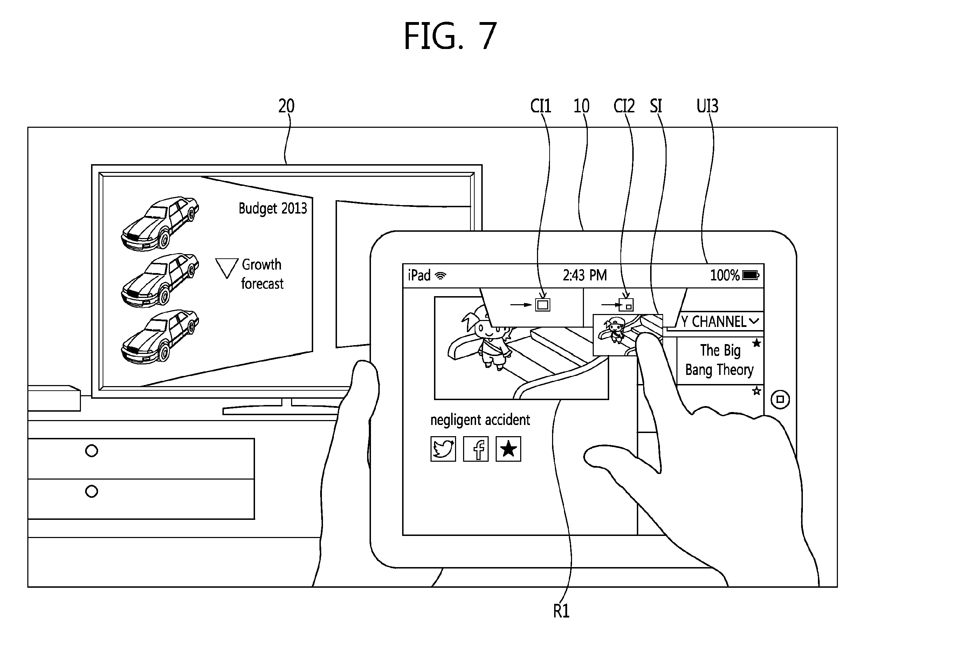

FIG. 7 shows an example in which content is selected in a user interface of the first device 10.

As shown in FIG. 7, when content is selected, a selection icon SI is displayed in a form in which the selection icon SI is separated from the playback screen of content displayed by a playback content display unit R1 as if the selection icon SI springs out from the playback screen. The selection icon SI may be displayed in accordance with a preset size and transparency. Furthermore, the selection icon SI can display the same screen as the playback screen of the content that is displayed in the playback content display unit R1. For example, the first device 10 can display the playback screen of the first content that is being displayed in the selection icon SI identically. Accordingly, in the state in which content has been selected, the playback content display unit R1 and the selection icon SI can display the real-time playback screen of the first content identically as shown in FIG. 7.

The selection icon SI can be moved on a screen of a user interface UI3 in response to a movement of a touch point by a user's touch. That is, when a user touches the playback screen of content and then a predetermined period elapses, the selection icon SI is generated. When the user drags the selection icon SI in a desired direction within a screen of the user interface UI3 in the state in which the user has touched the selection icon SI, the selection icon SI moves on a screen of the user interface UI3 in response to the user's touch point.

When the selection icon SI is displayed, the user interface UI3 can display a first control icon CI1 and a second control icon CI2 that are hidden. The first control icon CI1 may display a first picture indicative of a full screen. The second control icon CI2 may display a first picture configured to indicate the full screen and a second picture of a predetermined size disposed in the first picture of the second control icon and configured to indicate a subscreen. Accordingly, the user can be intuitively aware that the first control icon CI1 and the second control icon CI2 are full screen mode and PIP mode.

If the user drags the selection icon SI to the first control icon CI1 and then places at least part of the selection icon SI on the first control icon CI1 for a predetermined period or more, the touch screen 12 of the first device 10 detects that the at least part of the selection icon SI enters the region of the first control icon CI1 and the predetermined period or more elapses at step S4. In such a case, the transmission unit 120 of the first device 10 may send a control message, requesting that the first content be played back, but be displayed in full screen mode, to the second device 20 at step S5. In response to the control message, the second device 20 can stop the playback of the second content, play back the first content, and display the first content on the screen of the second device 20.

In contrast, if the user drags the selection icon SI to the second control icon CI2 and then places at least part of the selection icon SI on the second control icon CI2 for a predetermined period or more, the touch screen 12 of the first device 10 detects that the at least part of the selection icon SI enters the region of the second control icon CI2 and the predetermined period or more elapses at step S6. In such a case, the transmission unit 120 of the first device 10 may send a control message, requesting that the first content be played back, but be displayed in PIP mode, to the second device 20 at step S7. In response to the control message, the second device 20 can display the second content on a screen thereof while continuing to play back the second content and can display the playback screen of the first content in some region of the playback screen of the second content.

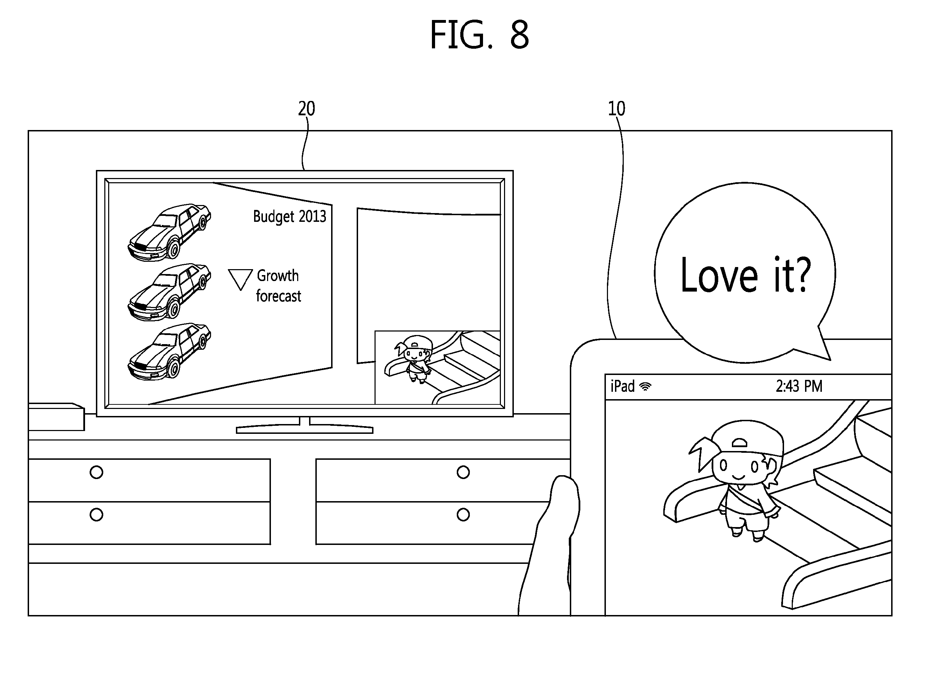

FIG. 8 is an exemplary diagram illustrating the situations of the first device 10 and the second device 20 after the user selects the second control icon CI2.

As shown in FIG. 8, the second content that was previously played back by the second device 20 is displayed on a screen of the second device 20, and the playback screen of the first content requested by the first device 10 through the control message is displayed in some region of a screen as a subscreen.

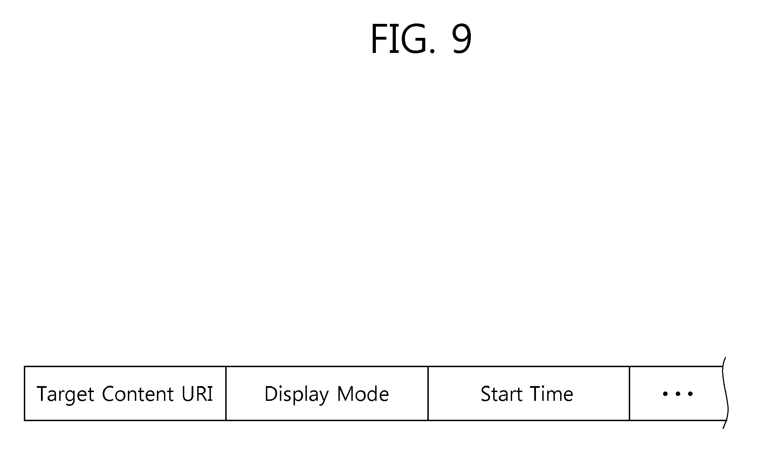

FIG. 9 shows the structure of the control message that is transmitted from the transmission unit 120 of the first device 10 to the second device 20.

As shown in FIG. 9, the control message may include "Target Content URI", "Display Mode", "Start Time", etc. The "Target Content URI" may mean a Universal Resource Identifier (URI) by which target content, for example, first content can be accessed. The "Display Mode" may be display mode information indicating that the target content will be displayed on a screen of the second device 20 using which one of full screen mode and PIP mode.

The "Start Time" may be the playback point information indicating a point of time at which content starts to play back in the second device 20. Assuming that target content is VOD content or content stored in a device within a home network, when the target content is played in the first device 10 and the second device 20, the first device 10 and the second device 20 need to be synchronized with each other so that the same contents are played back in the first device 10 and the second device 20. Alternatively, if the playback of first content in the first device 10 is stopped and target content needs to be seamlessly played back in the second device 20, the playback point information may be necessary. Accordingly, the control message may include "Start Time". For example, if target content is a real-time broadcasting program, "Start Time" may not be necessary. In such a case, a value of the 'Start Time" may be set to null.

For example, DLNA describes a content playback request message that is transmitted from a Digital Media Controller (DMC) to a Digital Media Renderer (DMR) or a Digital Media Player (DMP). The content playback request message includes a target content URI. The first device 10 may form the control message by designating specific unused fields as fields for "Display Mode" and "Start Time" or newly adding "Display Mode" and "Start Time" to the DLNA message depending on an environment in which the DLNA message is implemented.

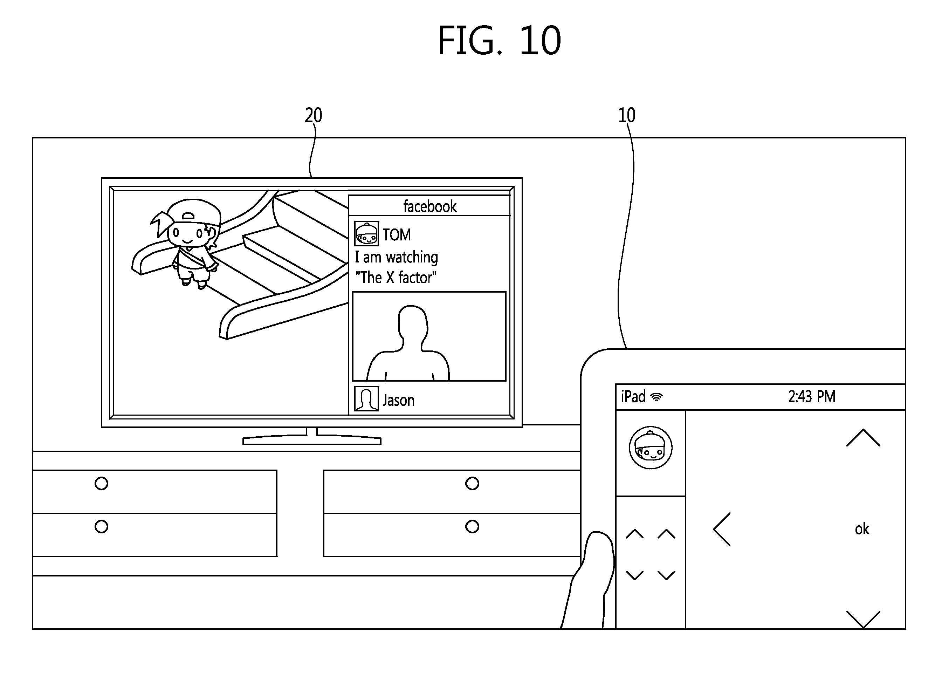

FIG. 10 shows an example in which an application is displayed in PIP mode in the second device 20 in response to a request from the first device 10.

As shown in FIG. 10, when a user selects an application in the first device 10, drags the selected application to a second control icon, and places the selected application on the second control icon for a predetermined period, the transmission unit 120 may send a control message, requesting that the selected application be displayed in PIP mode, to the second device 20. In response to the control message, the second device 20 can display the selected application on a screen of the second device 20 in PIP mode.

As described above, in accordance with the present invention, the user interfaces UI1, UI2, UI3, ..., that may be intuitively recognized by a user can be provided, and content selected by the user can be controlled so that the selected content is displayed in the second device 20, that is, a target device, in full screen mode or PIP mode based on the user interfaces UI1, UI2, UI3, .... Accordingly, user convenience can be maximized because a user can intuitively control a display device using a control device to his or her intentions.

In accordance with the present invention, if a user wants to change content being viewed using TV into another content in the state in which the user views the content using TV, the user may instruct TV to play back the content in a full screen using a smart device, such as a smart pad or a smart phone. If a user does not want to change content being viewed using TV into another content in the state in which the user views the content using TV, the user may instruct TV to play back the content in PIP mode using a smart pad or a smart phone. Alternatively, a user may instruct TV to play back content to be recommenced to another in PIP mode user using a smart device while viewing TV along with another user and, if another user wants to view the same content at the same time, a screen may switch to a full screen.

Meanwhile, in the aforementioned embodiments, an example in which the first device 10 sets the second device 20, that is, a target device, in full screen mode or PIP mode based on the first control icon CI1 and the second control icon CI2 included in the user interface has been described. In other embodiments of the present invention, the first device 10 may designate a subscreen size of the second device 20 in PIP mode, that is, a target device.

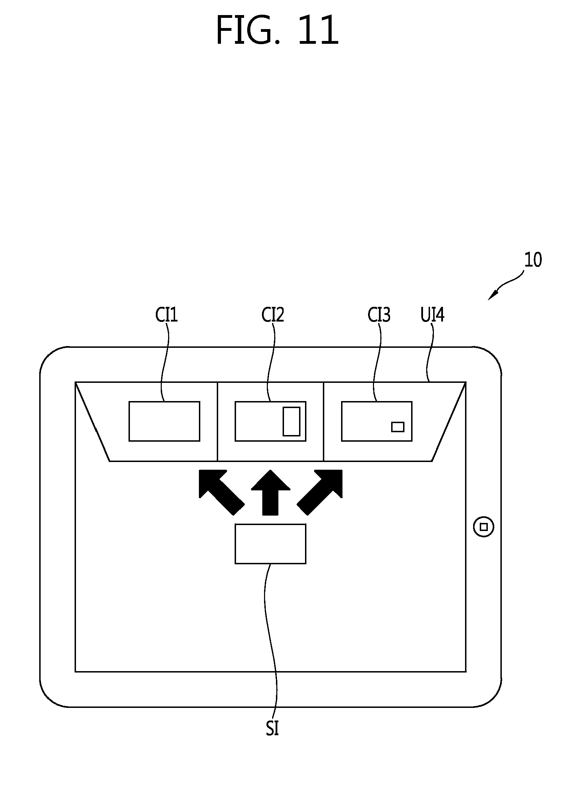

FIG. 11 illustrates yet another embodiment of a user interface displayed by the first device 10.

As shown in FIG. 11, a user interface UI4 includes a plurality of control icons CI1, CI2, and CI3. For example, the user interface UI4 may include a first control icon CI1, a second control icon CI2, and a third control icon CI3. The first control icon CI1 may indicate full screen mode. The second control icon CI2 may indicate PIP mode in which a subscreen is a first size. The third control icon CI3 may indicate PIP mode in which a subscreen is a second size.

A user may enter at least part of a selection icon SI into any one of the first control icon CI1, the second control icon CI2, and the third control icon CI3 by dragging the selection icon SI on the user interface UI4 displayed on the touch screen 12 and maintain the state for a predetermined time.

For example, if at least part of the selection icon SI enters the first control icon CI1 and then a lapse of a predetermined period or more is detected by the touch screen 12, the first device 10 may generate a control message requesting that selected content be displayed in full screen mode and send the control message to the second device 20.

If at least part of the selection icon SI enters the second control icon CI2 and a lapse of a predetermined period or more is detected by the touch screen 12, the first device 10 may send a control message, requesting that content be displayed using the subscreen of the first size, to the second device 20. In response to the control message, the second device 20 may display content that was being played back through a full screen and display the content requested by the first device 10 using the subscreen of the first size that is displayed on one side of a full screen.

If at least part of the selection icon SI enters the third control icon CI3 and a lapse of a predetermined period or more is detected by the touch screen 12, the first device 10 may send a control message, requesting that content be displayed using the subscreen of the second size, to the second device 20. In response to the control message, the second device 20 may display content that was being played back through a full screen and display the content requested by the first device 10 using the subscreen of the second size that is displayed on one side of a full screen.

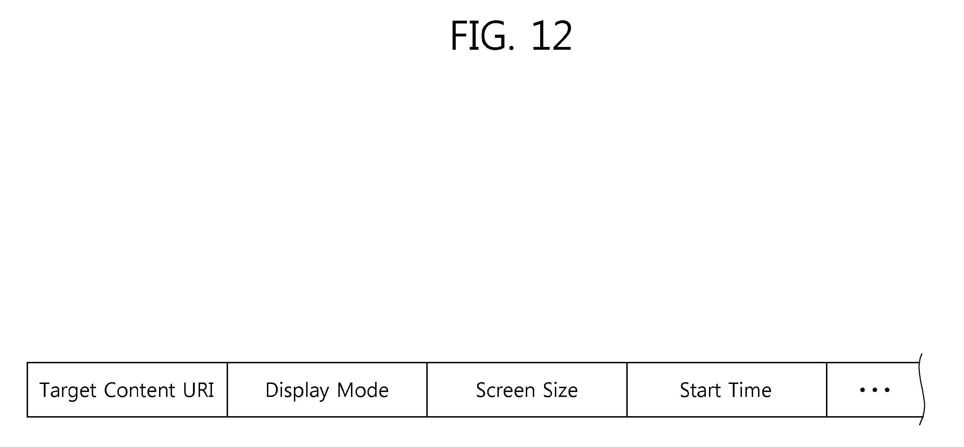

FIG. 12 is an exemplary diagram showing the structure of a control message that is transmitted from the first device 10 to the second device 20.

As shown in FIG. 12, the control message may include "Target Content URI", "Display Mode", "Screen Size", "Start Time", and so on. The "Target Content URI" may mean a Universal Resource Identifier (URI) by which target content, for example, first content can be accessed. The "Display Mode" may be display mode information indicating that target content will be displayed on a screen of the second device 20 using any one of full screen mode and PIP mode. The "Start Time" may be playback point information indicating a point of time at which content starts to be played back in the second device 20.

In the control message of FIG. 12, "Screen Size" is added to the control message of FIG. 10. The "Screen Size" may be subscreen size information indicating the size of a subscreen in PIP mode.

In accordance with other embodiments of the present invention, full screen mode and PIP mode corresponding to a plurality of sizes can be set using any one of the "Display Mode" and the "Screen Size" shown in FIG. 12.

For example, a mode in which requested target content is displayed in full screen mode may be set as full screen mode, a mode in which target content is displayed using a subscreen of a first size may be set as first PIP mode, a mode in which target content is displayed using a subscreen of a second size may be set as second PIP mode. In such a state, the first device 10 may request the second device 20 to display content in designated mode by designating any one of full screen mode, first PIP mode, and second PIP mode using a value of the "Display Mode" of the control message. In such a case, "Screen Size" may not need to be additionally set.

In another embodiment, "Screen Size" may be assumed to be information indicative of a screen size for displaying target content. For example, it may be assumed that target content is displayed in full screen mode when "Screen Size" is 100%, target content is displayed in PIP mode in which the target content is displayed using the subscreen of the first size when "Screen Size" is 50%, and target content is displayed in PIP mode in which the target content is displayed using the subscreen of the second size when "Screen Size" is 25%. In such a case, the first device 10 may transfer information, indicating any one of full screen mode, first PIP mode, and second PIP mode, to the second device 20 using only the "Screen Size" of the control message. Accordingly, "Screen Size" may not need to be additionally set.

As described above, for example, DLNA describes the content playback request message transmitted from a DMC to a DMR or a DMP. The content playback request message includes a target content URI. The first device 10 may form the control message by designating at least one unused field as at least any one of "Display Mode" and "Screen Size" or newly adding at least one of "Display Mode" and "Screen Size" to the DLNA message depending on an environment in which the DLNA message is implemented.

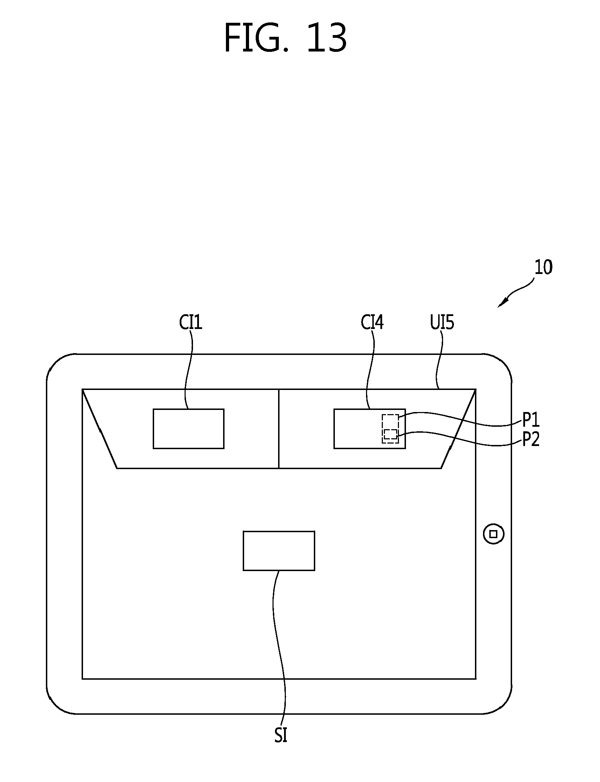

FIG. 13 illustrates further yet another embodiment of a user interface displayed by the first device 10.

As shown in FIG. 13, a user interface UI5 includes a plurality of control icons CI1 and CI4. For example, the user interface UI5 may include a first control icon CI1 and a second control icon CI4. The first control icon CI1 may indicate full screen mode as in the aforementioned embodiments.

The second control icon CI4 is a control icon by which a plurality of PIP modes can be selected. For example, the second control icon CI4 may include a second picture P1 of a predetermined size indicating a subscreen of a first size and a third picture P2 of a predetermined size indicating a subscreen of a second size in a first picture indicative of a full screen.

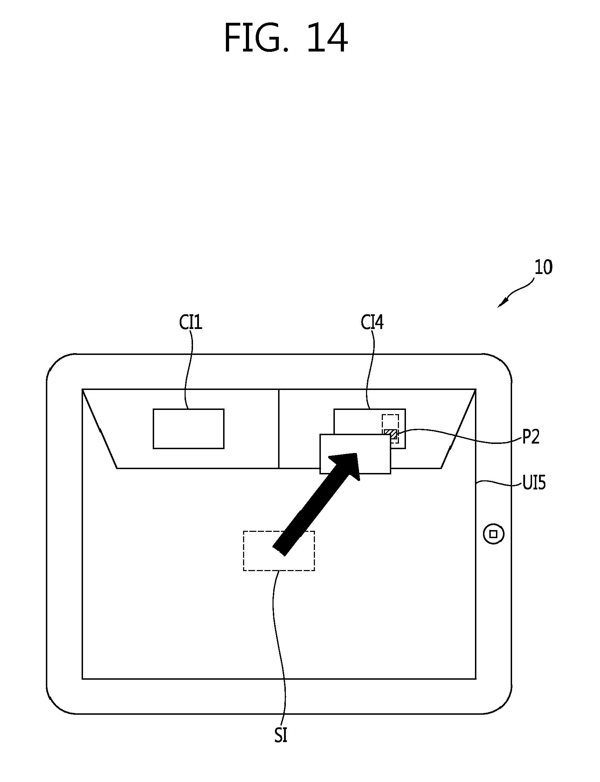

FIG. 14 shows an example in which at least part of a selection icon SI enters the region of the third picture P2.

As shown in FIG. 14, when at least part of the selection icon SI, for example, a point at the right upper part of the selection icon SI enters the third picture P2 of the second control icon CI4 in response to a user's drag, the third picture P2 may be highlighted so that it is distinguished from other regions. If a lapse of a predetermined period or more in such a state is detected by the touch screen 12, the first device 10 may send a control message, requesting that content be displayed using the subscreen of the second size, to the second device 20. In response to the control message, the second device 20 may display content that was being displayed through a full screen and display the content requested by the first device 10 using the subscreen of the second size that is displayed on one side of the full screen of the second device 20.

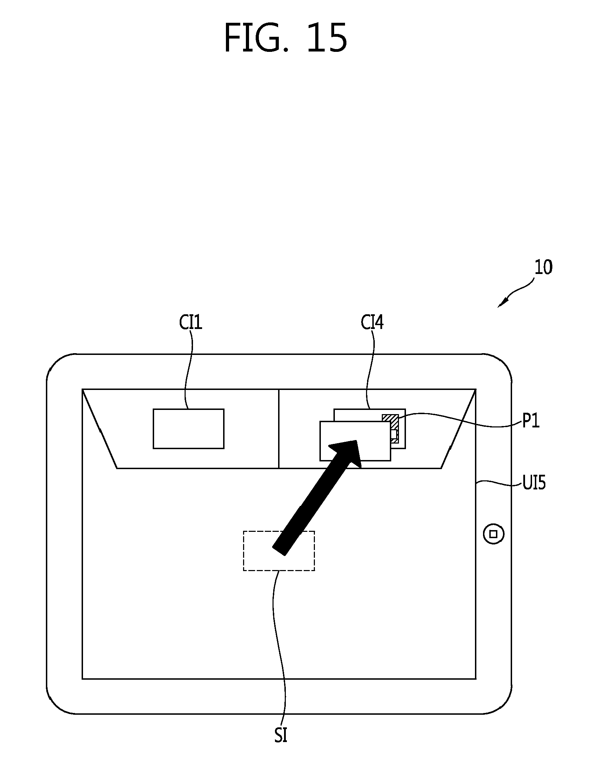

FIG. 15 shows an example in which at least part of the selection icon SI enters the region of the second picture P1.

As shown in FIG. 15, when at least part of the selection icon SI, for example, a point at the right upper part of the selection icon SI enters the second picture P1 of the second control icon CI4 in response to a user's drag, the second picture P1 may be highlighted so that it is distinguished from other regions. Here, the third picture P3 in the second picture P2 may not be highlighted. If a lapse of a predetermined period or more in such a state is detected by the touch screen 12, the first device 10 may send a control message, requesting that content be displayed using the subscreen of the first size, to the second device 20. In response to the control message, the second device 20 may display content that was being displayed through a full screen and display the content requested by the first device 10 using the subscreen of the first size that is displayed on one side of the full screen of the second device 20.

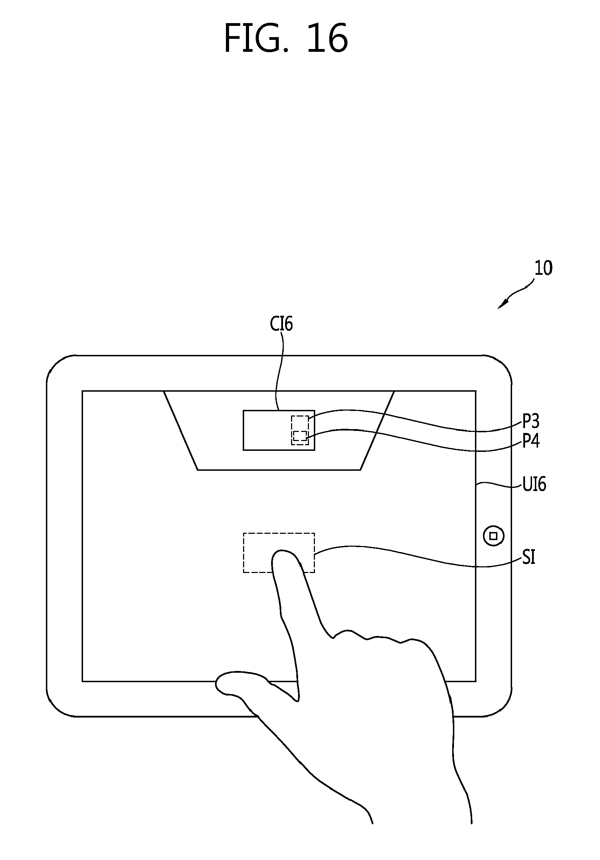

FIG. 16 is an exemplary diagram illustrating a user interface in which a control icon having the first control icon and the second control icon shown in FIG. 15 integrated therein is displayed.

As shown in FIG. 16, the user interface can display a control icon CI6 having an integrated form. Full screen mode and a plurality of PIP modes corresponding to a plurality of subscreen sizes can be selected using the control icon CI6. For example, the control icon CI6 may include a fourth picture P3 of a predetermined size indicating a subscreen of a first size and a fifth picture P4 of a predetermined size indicating a subscreen of a second size, within a first picture indicative of a full screen.

If at least part of a selection icon SI, for example, a point at the right upper part of the selection icon SI is displayed in the first picture in response to a user's drag, the first picture may be highlighted. If a lapse of a predetermined period or more is detected by the touch screen 12, the first device 10 may send a control message, requesting that content be displayed in full screen mode, to the second device 20.

If at least part of the selection icon SI, for example, a point at the right upper part of the selection icon SI enters the fourth picture P3 of the control icon CI6 in response to a user's drag, the fourth picture P3 may be highlighted so that it is distinguished from other regions. Here, other parts in the control icon CI6 are not highlighted. If a lapse of a predetermined period or more in such a state is detected by the touch screen 12, the first device 10 may send a control message, requesting that content be displayed using the subscreen of the second size, to the second device 20.

If at least part of the selection icon SI, for example, a point at the right upper part of the selection icon SI enters the fifth picture P4 of the control icon CI6 in response to a user's drag, the fifth picture P4 may be highlighted so that it is distinguished from other regions. Here, other parts in the control icon CI6 are not highlighted. If a lapse of a predetermined period or more in such a state is detected by the touch screen 12, the first device 10 may send a control message, requesting that content be displayed using the subscreen of the first size, to the second device 20.

Meanwhile, the highlight described with reference to FIGS. 13 to 16 may mean that a color in a picture or a color at the edge part of a picture is changed so that it is distinguished from colors at other parts. Furthermore, the first to fifth pictures shown in FIGS. 13 to 15 may be hidden so that they are not seen by a user. In such a case, a corresponding picture may be hidden and then highlighted. For example, when the entry of at least part of the selection icon SI into any one hidden picture is detected by the touch screen 12, the user interface processing unit 110 may display the one hidden picture.

As described above, in accordance with the present invention, a user can intuitively control a display device using a control device to his or her intentions. In particular, in accordance with the present invention, a single control message, including a content URI for a target device, display mode information (i.e., full screen mode/PIP mode), and subscreen size information, can be transmitted to the target device using only one drag operation performed by a user.

Accordingly, if a user has only to perform an operation of dragging content that is being played back using a specific control icon once through a user interface of a smart device, the user can view desired content in desired screen display mode in accordance with a desired screen size through a target device. This can be realized using the new types of the user interfaces that reflect a user's intention simply and intuitively and the control messages associated with the user interfaces.

As a result, in accordance with the present invention, user convenience can be maximized because a user can intuitively control a display device using a control device to his or her intentions.

Although the embodiments of the present invention have been described above, those skilled in the art will appreciate that the present invention may be modified in various ways without departing from the spirit and scope of the present invention defined in the appended claims. Accordingly, a possible change of the embodiments of the present invention will not depart from the technology of the present invention.

## Claims

1. A device control apparatus, comprising:
a user interface processing unit for displaying a user interface, comprising a content selection unit for selecting content and a first control icon and a second control icon, on a touch screen of a first device, generating a selection icon indicating that the content has been selected when a signal to select the content selection unit is received from the touch screen, and displaying the selection icon on the touch screen; and
a transmission unit for sending a control message, requesting that the content be displayed on a screen of a second device using any one of full screen mode and Picture In Picture (PIP) mode, to the second device when at least part of the selection icon enters any one of the first control icon and the second control icon and a lapse of a predetermined period or more is detected by the touch screen.

2. The device control apparatus of claim 1, wherein:
the user interface displays a playback screen of the content,
the content selection unit is at least part of the playback screen, and
the content selection unit indicates that the content has been selected in a form in which the selection icon is separated from the playback screen, when the content selection unit is touched in accordance with a predetermined pattern or for a predetermined period.

3. The device control apparatus of claim 1, wherein:
the user interface displays a playback screen of the content,
the selection icon is displayed based on a preset size and transparency, and
the selection icon displays a screen identical with the playback screen of the content and moves on the touch screen in response to a movement of a touch point by a user's touch.

4. The device control apparatus of claim 1, wherein:
the first control icon displays a first picture indicative of a full screen, and
the second control icon displays a first picture configured to indicate the full screen and a second picture of a predetermined size disposed in the first picture of the second control icon and configured to indicate a subscreen.

5. The device control apparatus of claim 1, wherein:
the user interface further comprises a third control icon,
the transmission unit sends a message, requesting that the content be displayed using a subscreen of a first size, to the second device when at least part of the selection icon enters the second control icon and a lapse of a predetermined period or more is detected by the touch screen, and
the transmission unit sends a message, requesting that the content be displayed using a subscreen of a second size, to the second device when at least part of the selection icon enters the third control icon and a lapse of a predetermined period or more is detected by the touch screen.

6. The device control apparatus of claim 5, wherein:
the second control icon displays a first picture configured to indicate a full screen and a second picture of a predetermined size disposed in the first picture of the second control icon and configured to indicate a subscreen of the first size,
the third control icon displays a first picture configured to indicate the full screen and a third picture of a predetermined size disposed in the first picture of the third control icon and configured to indicate the subscreen of the second size, and
the second picture and the third picture have different sizes.

7. The device control apparatus of claim 1, wherein the second control icon comprises:
a first picture configured to indicate a full screen;
a second picture of a predetermined size disposed in the first picture of the second control icon and configured to indicate a subscreen of a first size; and
a third picture disposed in the first picture of the second control icon and configured to indicate a subscreen of a second size and have a size different from a size of the second picture.

8. The device control apparatus of claim 7, wherein:
the transmission unit sends a message, requesting that the content be displayed using the subscreen of the first size, to the second device when at least part of the selection icon enters the second picture and a lapse of a predetermined period or more is detected by the touch screen, and
the transmission unit sends a message, requesting that the content be displayed using the subscreen of the second size, to the second device when at least part of the selection icon enters the third picture and a lapse of a predetermined period or more is detected by the touch screen.

9. The device control apparatus of claim 7, wherein the user interface processing unit highlights the second picture or the third picture when entry of at least part of the selection icon into the second picture or the third picture is detected by the touch screen.

10. The device control apparatus of claim 7, wherein the user interface processing unit hides at least any one of the second picture and the third picture and displays the at least one hidden picture when entry of at least part of the selection icon into the at least one hidden picture is detected by the touch screen.

11. The device control apparatus of claim 1, wherein the control message comprises at least one of:
a Universal Resource Identifier (URI) for accessing the content;
display mode information indicating that the content is to be displayed on a screen of the second device in either the full screen mode or the PIP mode;
screen size information indicating a screen size of the content displayed in the second device; and
playback point information indicating a point of time at which the content starts to be played back in the second device.

12. A device control method, comprising:
displaying a user interface, comprising a content selection unit for selecting content and a first control icon and a second control icon, on a touch screen of a first device;
generating a selection icon indicating that the content has been selected when a signal to detect a selection of the content selection unit is received from the touch screen;
displaying the generated selection icon on the touch screen; and
sending a message, requesting that the content be displayed on a screen of a second device using any one of full screen mode and Picture In Picture (PIP) mode, to the second device when at least part of the selection icon enters any one of the first control icon and the second control icon and a lapse of a predetermined period or more is detected by the touch screen.

13. The device control method of claim 12, wherein:
the user interface displays a playback screen of the content,
the content selection unit is at least part of the playback screen, and
the content selection unit indicates that the content has been selected in a form in which the selection icon is separated from the playback screen, when the content selection unit is touched in accordance with a predetermined pattern or for a predetermined period.

14. The device control method of claim 12, wherein:
the user interface displays a playback screen of the content,
the selection icon is displayed based on a preset size and transparency, and
the selection icon displays a screen identical with the playback screen of the content and moves on the touch screen in response to a movement of a touch point by a user's touch.

15. A device control system, comprising:
a first device and a second device,
wherein the first device displays a user interface, comprising a content selection unit for selecting content and a first control icon and a second control icon, on a touch screen of the first device, generates a selection icon indicating that the content has been selected when a signal to select the content selection unit is received from the touch screen, displays the selection icon on the touch screen, and sends a message, requesting that the content be displayed on a screen of a second device using any one of full screen mode and Picture In Picture (PIP) mode, to the second device when at least part of the selection icon enters any one of the first control icon and the second control icon and a lapse of a predetermined period or more is detected by the touch screen.
